# EUROPEAN PATENT APPLICATION

(11) **EP 1 508 466 A1**
(43) Date of publication of application: **23.02.2005**
(21) Application number: 03018906.2
(22) Date of filing: 20.08.2003
(51) Int. Cl.: B60K 23/08, B60K 17/35, B60K 41/24, B60K 28/16

(54) **An all wheel drive system**

(71) Applicant: Ford Global Technologies, LLC, Dearborn, MI 48126 (US)
(72) Inventor: Ekström, Kenneth, 412 59 Göteborg (SE)
(74) Representative: Hellbom, Lars Olof

(57) **Abstract**

An all wheel drive system for a vehicle is presented, comprising a first clutch (17) for control of transfer of torque to the rear wheels (9, 10), and a second clutch (19) is provided for control of transfer of torque to the front wheels (4, 5). Preferably, the first and second clutch (17, 19) are located in different areas of the vehicle. Preferably, the second clutch (19) is located between a differential (6) for the front wheels and one of the front wheels (5).

## Description

### TECHNICAL FIELD

The present invention refers to an all wheel drive system for a vehicle according to the preamble of claim 1.

### BACKGROUND

All wheel drive systems often includes torque transfer to the front wheels in addition to which torque transfer to the rear wheels is controlled by an electrically controllable clutch. In such a system the rear wheels can not rotate faster than the front wheels in a so called power on situation, e.g. when the vehicle is accelerating. On high friction surfaces this can result in an understeer behavior of the vehicle in power on situations, which a driver might experience as a poor handling "feeling" of the vehicle. One way of solving this problem is to provide different gear ratios to the front and rear wheels, for example by means of suitable relative arrangement of bevel gear angle drives for rear and front wheels. However, this might introduce heat and wear problem in the drivetrain and on the tires.

Another problem with a high ratio of torque provided to the front wheels is that it can enhance torquesteering tendencies of the vehicle, which impairs the handling characteristics of the vehicle, and can even be detrimental to the driving safety.

In addition to this, a high torque ratio on the front wheels will increase the ground contact friction and create a risk of sliding of the wheels in an engine braking situation, especially in slippery road conditions.

US5443429 describes a powershifting transfer case with one clutch for each of two output shafts, coupled to the front and rear axle, respectively. A disadvantage with such an arrangement is that it is difficult or impossible to fit in an existing geometry of a vehicle in production, in which it is desired to implement an all wheel drive system, or to improve an existing all wheel drive system. Also, a distribution case, such as the one described in US5443429 requires a lot of space in one area of the vehicle, typically somewhere between the front and rear wheel axles, and this makes it difficult to integrate even in a new model of vehicle.

### SUMMARY

It is an object of the present invention to provide an all wheel drive system which improves the handling characteristics of a vehicle.

It is an object of the present invention to provide an all wheel drive system which improves the handling safety of a vehicle.

These objects are reached by an all wheel drive system of the type stated initially, presenting the characterizing features of claim 1.

The second clutch provided for control of transfer of torque to the front wheels makes it possible for the vehicle to be fully front wheel driven, fully rear wheel driven, or driven with any torque ratio between the front and rear wheels. This gives a high flexibility, since the drivetrain of the vehicle can be adapted in an infinite number of ways, to give the vehicle any desired handling characteristic. For example, a higher torque can be provided to the rear wheels than to the front wheels. Then, in a power on situation, the longitudinal wheelslip will be higher on the rear wheels than on the front wheels. This will reduce understeering, make the steering neutral, or even induce oversteering. This improves the handling "feeling" of the vehicle.

Also, a higher ratio of torque provided to the rear wheels will reduce torquesteering tendencies, resulting in improved handling characteristics of the vehicle, and possibly an improvement of the driving safety. Optimizing the torque on the front wheels will improve the steering "feeling" as experienced by a driver of the vehicle.

Preferably, the first and second clutch are located in different areas of the vehicle. This provides a lot of flexibility during the implementation of the all wheel drive system, and problems of integration due to space limitation can more easily be solved than in the employment of a central distribution case for the power transfer.

Preferably, the second clutch is located between a differential for the front wheels and one of the front wheels. Thereby, the clutch can reduce torque on the front axle and since the differential gives approximately the same torque on the left and the right front wheel, the torque on the front axle is distributed evenly. Between the differential for the front wheels and one of the front wheels there is usually space available for a clutch to be provided without the need for major design alterations of the vehicle. Thus, the all wheel drive system can be readily integrated in a vehicle model, without the need for major design alterations of the model. The embodiment presents a simplified design.

Preferably, the first clutch and the second clutch are connected to and activation thereof controllable independently by an electronic control system. The electronic control system can be adapted to receive signals corresponding to status information of suitable parameters, such as accelerator pedal setting, vehicle speed, engine rpm, output torque, lateral acceleration, actual and target yaw speed, etc, obtained in manners known in the art. As an example, the yaw behavior of the vehicle can be determined at least partly based on signals from a steering wheel angle sensor and a gyro. Based on such information the electronic control system can determine suitable clutch activations and send control signals independently to the first and the second clutch so as for torque to be distributed between the front and the rear wheels in a manner suitable for driving and operation conditions at hand.

Preferably, the electronic control system is adapted so that, in an engine braking situation, it sends signals to the first and the second clutch, so as to optimize the yaw behavior of the vehicle. Optimizing the yaw behavior of the vehicle in an engine braking situation, means minimizing tendencies towards understeer or oversteeer.

An understeer behavior in an engine braking situation will be the result if there is too much torque on the front wheels in relation to the rear wheels, which will cause front wheels to rotate slower than the rear wheels, or even slide, in turn causing an understeer behavior. Thereby, according to the embodiment in question, the percentage of torque distributed to the rear wheels is increased, which will decrease the wheel speed difference between the front and the rear wheels, in turn reducing the understeer behavior. Increasing the percentage of torque distributed to the rear wheels could be accomplished by increasing the torque to the rear wheels and/or decreasing the torque to the front wheels. Preferably, in an understeer engine brake situation, torque distribution to the front wheels is decreased and torque distribution to the rear wheels is increased. In this embodiment, during the process of optimizing the yaw behavior in an engine braking situation, the control of the clutches can be based at least partly on the detected wheels speeds, and actual and target yaw speed of the vehicle. Through vehicle producer investigations of vehicle behavior it has been established that for many vehicle models a higher distribution of torque to the rear wheels than to the front wheels is advantageous in engine braking situations.

Correspondingly, in an engine braking situation, too much torque on the rear wheels in relation to the front wheels, can cause an oversteer behavior. Thereby, according to the embodiment in question, the percentage of torque distributed to the front wheels is increased, to decrease the wheel speed difference between the front and the rear wheels, reducing the oversteer behavior.

Preferably, the electronic control system is adapted so that, in an engine braking situation, it sends signals to the first and the second clutch, so as to minimize the risk of wheel sliding. This can be advantageous in situations where there is a risk of wheel slide, even if the ratio of torque between the front and rear wheels is well adjusted, for example during snowy and/or icy road conditions. Thereby, the torque to both front and rear wheels could be decreased, or even terminated. Monitoring the detected wheel speeds, the electronic control system could adjust the torque so that wheel slide is avoided, but an engine brake force is still distributed.

Preferably, the electronic control system is adapted so that, in an engine braking situation, the electric control system sends signals to the first and the second clutch so that the torque distribution to the front and rear wheels corresponds to the weight distribution to the front and rear wheels. Distributing torque to the front and rear wheels corresponding to the weight distribution to the front and rear wheels may be a good starting point of the control system in an engine braking case. Subsequent torque distribution can be made so as to optimize the yaw behavior of the vehicle, as described above. Since the vehicle weight distribution on front and rear axles approximately corresponds to the friction forces acting on the tires in an engine braking situation, distributing the torque accordingly will reduce the risk of wheels sliding.

Preferably, at least one of the first clutch and the second clutch is arranged so that the clutch can be biased to an engaging condition independently of signals from the electronic control system. This will secure torque being delivered to at least the front wheels or the rear wheels in case of failure or malfunction of the electronic control system. The arrangement can be accomplished by a mechanical pre-tension on the clutch, against which a clutch actuation device act based on signals from the control system. If signals from the control system are no longer received by the clutch actuation device, the pre-tension will urge the clutch to an engaged condition, i.e. a condition in which the clutch transfers torque to its full capacity. This will prevent the vehicle from loosing its propulsion in case of a failure of the electronic control system.

Said arrangement with the clutch being biased to an engaging condition, independently of signals from the electronic control system, can be implemented in the first clutch or in the second clutch, or in both. If said arrangement is implemented in one of the clutches only, it is preferred that it is implemented at the second clutch, provided for control of transfer of torque to the front wheels. This is more advantageous from a driving safety point of view, than the arrangement being implemented for the rear wheels only.

Preferably, the electronic control system is adapted to send at least one signal to at least one of the first clutch and the second clutch so as to decrease torque transfer to the respective wheels, or to disengage the clutch, in case of activation of a braking system of the vehicle. In known art, when the brakes of the vehicle are activated, the vehicle engine can still be connected to the wheels. This can be due to the driver not having disengaged the gearbox clutch at brake pedal maneuvering, or the vehicle being equipped with an automatic transmission. This will result in a decrease of the braking performance since a part of the braking forces will be used to decrease the rotation speed of the engine. By decreasing, in case of activation of a braking system of the vehicle, torque transfer to the respective wheels, or disengaging the first and/or second clutch, this problem will be solved, since less or no braking power is consumed by decreasing the rotation speed of the engine. Not only will this improve the braking performance of the vehicle, but it will also reduce wear on parts of the braking system and vehicle drivetrain.

Preferably, the electronic system is adapted to send at least one signal to at least one of the first clutch and the second clutch so as to decrease torque transfer to the respective wheels, or to disengage the clutch, in case of activation of an anti-lock braking system of the vehicle. If the vehicle is equipped with an anti-lock braking system (ABS) it can be disadvantageous to allow engine braking simultaneously with activation of the anti-lock braking system, since this might cause vibrations in the vehicle. The decrease of torque transfer or disengagement of the clutches will prevent such vibrations.

Preferably, the electronic system is adapted to send at least one signal to at least one of the first clutch and the second clutch so as to decrease torque transfer to the respective wheels, or to disengage the clutch, in case of activation of an electronic vehicle stability system of the vehicle. The electronic vehicle stability system could be ESP (Electronic Stability Program), VDC (Vehicle Dynamic Control), VSC (Vehicle Stability Control), DSTC (Dynamic Stability and Torque Control), DSC (Dynamic Stability Control), ATTS Automatic Torque Transfer System), or VSA (Vehicle Stability Assist), or any other system adapted to aid vehicle stability. Such an electronic vehicle stability system might include, according to known art, capability of suitable individual activation of wheel brakes. The torque transfer to front or rear wheels may interfere with the action of the electronic vehicle stability system so as to render a vehicle stabilizing effort by the electronic vehicle stability system difficult. The decrease of torque transfer or disengagement of the clutches will prevent such interference.

Preferably, the electronic control system is adapted send at least one signal to at least one of the first clutch and the second clutch based on at least one activity of a spin control system of the vehicle. The activation of the first and second clutch may be dependent upon an interaction between the clutch control system and the spin control system. This might avoid the two systems working against each other, so as to decrease the result of intended actions of either or both systems. It might also avoid actions of one system having a stronger result than intended by that system, due to an action by the other system working in the same direction.

Preferably, the electronic control system is adapted send at least one signal to at least one of the first clutch and the second clutch based on at least one activity of an automatic transmission control system of the vehicle. The activation of the first and second clutch may be dependent upon an interaction between the clutch control system and the automatic transmission control system. This will improve the gear shifting quality and reduce wear in the gearbox, especially in high performance cars.

### BRIEF DESCRIPTION OF THE FIGURE

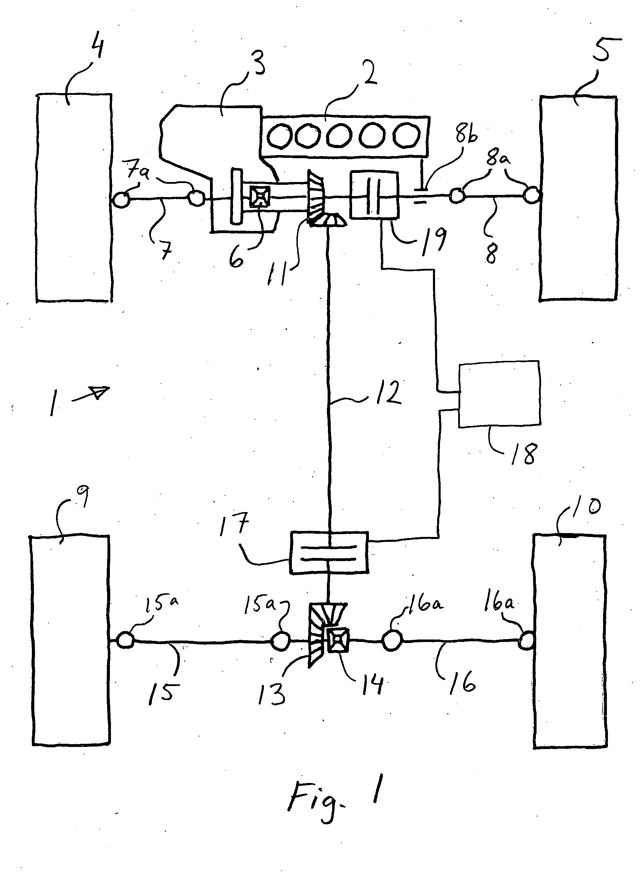

Below the invention will be described in detail, with the aid of the accompanying drawing, in which fig. 1 is a schematic illustration of a drivetrain in a vehicle with an all wheel drive system according to a preferred embodiment of the invention.

### DETAILED DESCRIPTION OF EMBODIMENTS

Fig. 1 shows schematically a drivetrain 1 in a vehicle with an all wheel drive system according to a preferred embodiment of the invention. A vehicle engine 2 and gearbox 3 are connectable to a left 4 and right 5 front wheel via a front differential 6, left 7 and right 8 front drive shafts, and drive shaft joints 7a, 8a. A drive shaft support bearing 8b is provided for the right front drive shaft 8. The vehicle engine 2 and gearbox 3 are connectable to a left 9 and right 10 rear wheel via a front bevel gear 11, a cardan shaft 12, a rear bevel gear 13, a rear differential 14, left 15 and right 16 rear drive shafts, and drive shaft joints 15a, 16a.

The all wheel drive system comprises a first clutch 17 between the front bevel gear 11 and the rear bevel gear 13, for control of transfer of torque to the rear wheels 9, 10. Preferably, the first clutch 17 is a controlled wet multiplate clutch. The first clutch 17 is connected to and activation thereof controllable by an electronic control system 18. Using CANbus relayed sensor information, such as wheel speed, engine data, and gas pedal position, the electronic control system 18 can activate a clutch actuation device, e.g. in the form of a stepper motor-driven relief or "throttle" valve, to govern a coupling hydraulic pressure of the first clutch 18, and thus the percentage of torque transferred to the rear wheels can be controlled.

According to the invention, a second clutch 19 is provided for control of transfer of torque to the front wheels 4, 5. In this embodiment the second clutch 19 is located between the front differential 6 and the right the front wheel 5. Thereby, the torque is distributed approximately evenly to the front wheels 4, 5 by the front differential 6. Of course, other locations are possible for the second clutch 19, e.g. between the front differential 6 and the left front wheel 4. However, if the gearbox 3 is located on the left side of the vehicle, there is plenty of space available for the second clutch 19 between the front differential 6 and the right front wheel 5. In fig. 1, the second clutch 19 is located between the drive shaft support bearing 8b, but the presence of the bearing 8b or the location of the clutch 19 in relation thereto is not essential, and alternative arrangements of the second clutch are possible, whereby the arrangement can be chosen taking into account space considerations in the vehicle model in question.

Preferably, the second clutch 19 is of the same or a similar type as the first clutch 17, see above. The second clutch 19 is also connected to and activation thereof controllable by an electronic control system 18, whereby it receives signals from the electronic control system 18 independently of the first clutch 17, and vice versa. Thus, the percentage of torque transferred to the front wheels can be controlled independently of the percentage of torque transferred to the rear wheels. Thus, the first and the second clutches are adapted to transfer torque according to a plurality of individual torque ratios.

In a power on situation, the electric control system could send signals, based on information received, to the first 17 and/or second 19 clutch so as to provide a higher torque transfer to the rear wheels 9, 10 than the front wheels 4, 5. Thereby a higher wheel speed on the rear wheels 9, 10 than on the front wheels 4, 5 will reduce or eliminate understeering tendencies.

In an engine braking situation, the electric control system could send signals, based on information received, to the first 17 and/or second 19 clutch, so as to provide a higher torque transfer to the rear wheels 9, 10 than to the front wheels 4, 5, or so that the torque distribution to the front and rear wheels corresponds to the weight distribution to the front and rear wheels, in order to minimize the risk of wheels sliding.

The second clutch 19 is arranged so that there is a mechanical pre-tension, against which the clutch actuation device act based on signals from the electronic control system 18. If signals from the electronic control system are no longer received by the clutch actuation device, the pre-tension will urge the clutch to an engaged condition, i.e. a condition in which the clutch transfers torque to its full capacity. Such an arrangement to secure torque transfer in case of failure of the electronic control system 18 can also be provided on the first clutch 17. It should be noted that, besides a mechanical pre-tension, other failure backup solutions are possible to implement within the scope of the present invention.

In case of activation of the braking system of the vehicle, the electric control system could send signals, based on information received corresponding to the activation of the braking system, to the first 17 and/or second 19 clutch, so as to decrease torque transfer to the respective wheels, or to disengage the clutches. As described above, this will improve the braking performance of the vehicle, and reduce wear on parts of the braking system and vehicle drivetrain.

In case of activation of an anti-lock braking system of the vehicle, the electric control system could send signals, based on information received corresponding to the activation of the anti-lock braking system, to the first 17 and/or second 19 clutch, so as to decrease torque transfer to the respective wheels, or to disengage the clutches. As described above, this will prevent vibrations in the vehicle.

In case of activation of an electronic vehicle stability system of the vehicle, the electric control system could send signals, based on information received corresponding to the activation of the electronic vehicle stability system, to the first 17 and/or second 19 clutch, so as to decrease torque transfer to the respective wheels, or to disengage the clutches. As described above, this will prevent the torque transfer to front or rear wheels interfering with the action of the electronic vehicle stability system.

In case of activation of a spin control system of the vehicle, the electric control system could send signals to the first 17 and/or second 19 clutch, based on information received corresponding to the activation of the spin control system. As described above, this will avoid the spin control system and the all wheel drive system working against each other.

The electric control system could send signals to the first 17 and/or second 19 clutch, based on at least one activity of an automatic transmission control system of the vehicle. As described above, this will improve the gear shifting quality and reduce wear in the gearbox, especially in high performance cars.

The invention is also applicable in cases of vehicles with the engine mounted in other locations than in the front, as described above, e.g. vehicles with the engine mounted in the back of the vehicle. Using the denomination above, such an arrangement would include a first clutch for control of transfer of torque to the front wheels, and a second clutch is provided for control of transfer of torque to the rear wheels, whereby the second clutch could be located between a differential for the rear wheels and one of the rear wheels.

Apart from distributing torque according to what has been described above, the first and second clutch 17, 19 can also be used as clutches in a launch system for the vehicle, and during gear changes in the vehicle drivetrain.

## Claims

1. An all wheel drive system for a vehicle, comprising a first clutch (17) for control of transfer of torque to the rear wheels (9, 10), **characterized in that** a second clutch (19) is provided for control of transfer of torque to the front wheels (4, 5).

2. An all wheel drive system according to claim 1, whereby the first and second clutch (17, 19) are located in different areas of the vehicle.

3. An all wheel drive system according to claim 1 or 2, whereby the second clutch (19) is located between a differential (6) for the front wheels and one of the front wheels (5).

4. An all wheel drive system according to claim 1, 2 or 3, whereby the first clutch (17) is located between a front bevel gear (11) and a rear bevel gear (13), each adapted to transfer torque to the rear wheels (9, 10).

5. An all wheel drive system according to any of the preceding claims, whereby the first clutch (17) and the second clutch ( 19) are connected to and activation thereof controllable independently by an electronic control system (18).

6. An all wheel drive system according to claim 5, whereby the electronic control system (18) is adapted so that, in an engine braking situation, it sends signals to the first and the second clutch (17, 19), so as to optimize the yaw behavior of the vehicle.

7. An all wheel drive system according to claim 5 or 6, whereby the electronic control system (18) is adapted so that, in an engine braking situation, it sends signals to the first and the second clutch (17, 19), so as to minimize the risk of wheel sliding.

8. An all wheel drive system according to claim 7, whereby the electronic control system (18) is adapted so that it sends signals to the first and the second clutch (17, 19), so as for the torque distribution to front and rear wheels (4, 5, 9, 10) to be decreased or terminated.

9. An all wheel drive system according to claim 5, whereby the electronic control system (18) is adapted so that, in an engine braking situation, the electric control system (18) sends signals to the first and the second clutch so that the torque distribution to the front and rear wheels (4, 5, 9, 10) corresponds to the weight distribution to the front and rear wheels.

10. An all wheel drive system according to any of the claims 5-9, whereby at least one of the first clutch (17) and the second clutch (19) is arranged so that the clutch can be biased to an engaging condition independently of signals from the electronic control system (18).

11. An all wheel drive system according to claim 5-9, whereby the second clutch (19) is arranged so that it can be biased to an engaging condition independently of signals from the electronic control system (18).

12. An all wheel drive system according to any of the claims 5-11, whereby the electronic control system (18) is adapted to send at least one signal to at least one of the first clutch (17) and the second clutch (19) so as to decrease torque transfer to the respective wheels, or to disengage the clutch, in case of activation of a braking system of the vehicle.

13. An all wheel drive system according to any of the claims 5-11, whereby the electronic control system (18) is adapted to send at least one signal to at least one of the first clutch (17) and the second clutch (19) so as to decrease torque transfer to the respective wheels, or to disengage the clutch, in case of activation of an anti-lock braking system of the vehicle.

14. An all wheel drive system according to any of the claims 5-13, whereby the electronic control system ( 18) is adapted to send at least one signal to at least one of the first clutch (17) and the second clutch (19) so as to decrease torque transfer to the respective wheels, or to disengage the clutch, in case of activation of an electronic vehicle stability system of the vehicle.

15. An all wheel drive system according to any of the claims 5-14, whereby the electronic control system (18) is adapted send at least one signal to at least one of the first clutch (17) and the second clutch (19) based on at least one activity of a spin control system of the vehicle.

16. An all wheel drive system according to any of the claims 5-15, whereby the electronic control system (18) is adapted send at least one signal to at least one of the first clutch (17) and the second clutch (19) based on at least one activity of an automatic transmission control system of the vehicle.

17. An all wheel drive system for a vehicle, comprising a first clutch (17) for control of transfer of torque to the front wheels (4, 5), **characterized in that** a second clutch is provided for control of transfer of torque to the rear wheels (9, 10).
